Europäisches Patentamt

European Patent Office

Office européen des brevets

(11) Publication number: **0 270 200 B1**

# EUROPEAN PATENT SPECIFICATION

(45) Date of publication of patent specification: **02.01.92**  (51) Int. Cl.⁵: **B03B 9/06**, B65B 69/00

(21) Application number: **87306302.8**

(22) Date of filing: **16.07.87**

(54) **Waste treatment apparatus.**

(30) Priority: **02.12.86 US 937159**

(43) Date of publication of application:
**08.06.88 Bulletin 88/23**

(45) Publication of the grant of the patent:
**02.01.92 Bulletin 92/01**

(84) Designated Contracting States:
**BE DE FR GB IT NL SE**

(56) References cited:
**DE-A- 2 605 100       DE-A- 2 812 125
GB-A- 2 082 540       US-A- 3 294 264
US-A- 3 528 577       US-A- 3 682 341**

(73) Proprietor: **CHEMICAL WASTE MANAGEMENT, INC.**
**3003 Butterfield Road**
**Oak Brook Illinois 60521(US)**

(72) Inventor: **Janko, Richard M.**
**P.O. 41064**
**Brecksville Ohio 44141(US)**
Inventor: **Shawl, Ronald C.**
**1618 Tiffin Road**
**Fremont Ohio 93920(US)**
Inventor: **Zelinski, Robert J.**
**4084 Wheatley Road**
**Richfield Ohio 44286(US)**

(74) Representative: **Gordon, Michael Vincent et al**
**GILL JENNINGS & EVERY 53-64 Chancery Lane**
**London WC2A 1HN(GB)**

Rank Xerox (UK) Business Services

## Description

This invention concerns a method and apparatus for the handling of waste and relates more particularly to the sorting of waste materials stored in drums.

US-A-4,341,353 discloses a method and apparatus for recovering fuel from refuse by utilising disk screens. The various components of the refuse are separated by passing the refuse through a disk screen wherein crushed glass and other fine materials are removed. The remaining refuse is then separated into light and heavy fractions in an air classifier. US-A-4,264,352 also discloses a solid waste handling system wherein heavy inorganic materials are segregated and removed for re-cycling purposes. A pug-mill is utilised to add moisture prior to digestion and maceration. US-A-3,790,091 shows a method for separating solid waste material into components by re-cycling the solid waste material through reducing devices to reduce the waste to uniform particle size and thereafter separating the particles by weight, size and magnetic properties.

It is also known from DE-A-2605100, which is acknowledged in the introductory parts of the present independent claims, for can opening and emptying means to include conveyor means for conveying closed cans sequentially to a shear station for shearing through said cans to form sheared lids and to a compactor station for compacting said sheared cans to extrude the contents of said cans.

There is, nevertheless, a need for a method and apparatus for reliably and conveniently opening and emptying industrial drums containing waste material to enable the waste material to be separated into different components for further treatment, disposal or storage as appropriate.

In accordance with one aspect of the present invention, waste handling apparatus comprising can opening and emptying means of the above-noted kind is characterised by further comprising:

a purging chamber, for receiving cans in the form of industrial drums containing waste having both solid and liquid/sludge components, said purging chamber having an inlet for inert gas to give a substantially air-free environment; and

a sorting means, for receiving the waste extruded from said compacted drums, said sorting means having a separator for separating the waste into solid components and liquid/sludge components;

with another aspect of the present invention relating to a corresponding waste handling method.

The solid components and the liquid/sludge components of the waste can each be conveyed to separate locations for further treatment, storage or disposal.

Waste handling apparatus, and a waste handling method, in accordance with the present invention, will now be described, by way of example only, with reference to the accompanying drawings, in which:-

Figure 1 is a plan view of the waste handling apparatus;

Figure 2 is a section taken along the line 2-2 of Figure 1;

Figure 2A is an enlarged section, similar to Figure 2, showing a drum being sheared;

Figure 2B is an enlarged section, similar to Figure 2, showing a drum being moved after being sheared;

Figure 3 is a section taken along the line 3-3 of Figure 2;

Figure 4 is a section taken along the line 4-4 of Figure 1;

Figure 5 is a section taken along the line 5-5 of Figure 1;

Figure 6 is a section taken along the line 6-6 of Figure 1;

Figure 6A is a partial section, similar to Figure 6, showing downturning of a partially compacted drum; and

Figure 6B is a partial section, similar to Figure 6, showing uprighting of a partially compacted drum.

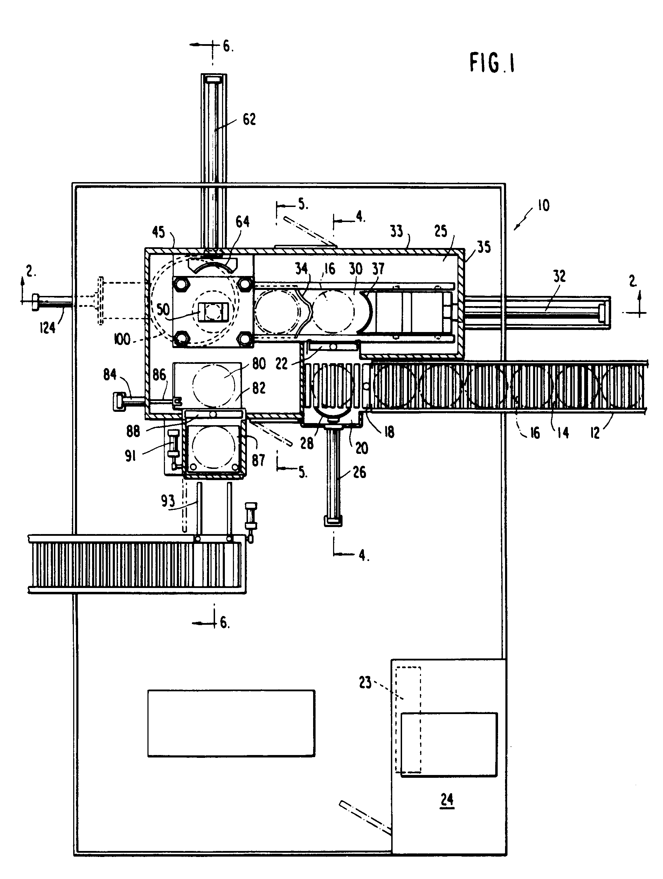

Referring now in more detail to the drawings, Figure 1 shows a frame 10 which supports the components of the waste handling apparatus including a bridge 12 on which there is a roller conveyor 14 for transporting a series of drums 16 which have been placed on the bridge by suitable means.

Each drum 16, in sequence, passes through an inlet door 18 of a purge compartment 20 having an outlet door 22. Both doors are air-lock operated by controls on panel 23 located inside a housing 24 which houses all controls for the system. An inert gas is used to purge the compartment 20 of substantially all its air. At a predetermined level of oxygen in the compartment 20, the inert gas purge is stopped. The outlet door 22 is opened and the drum 16 is moved therefrom by a conveyor.

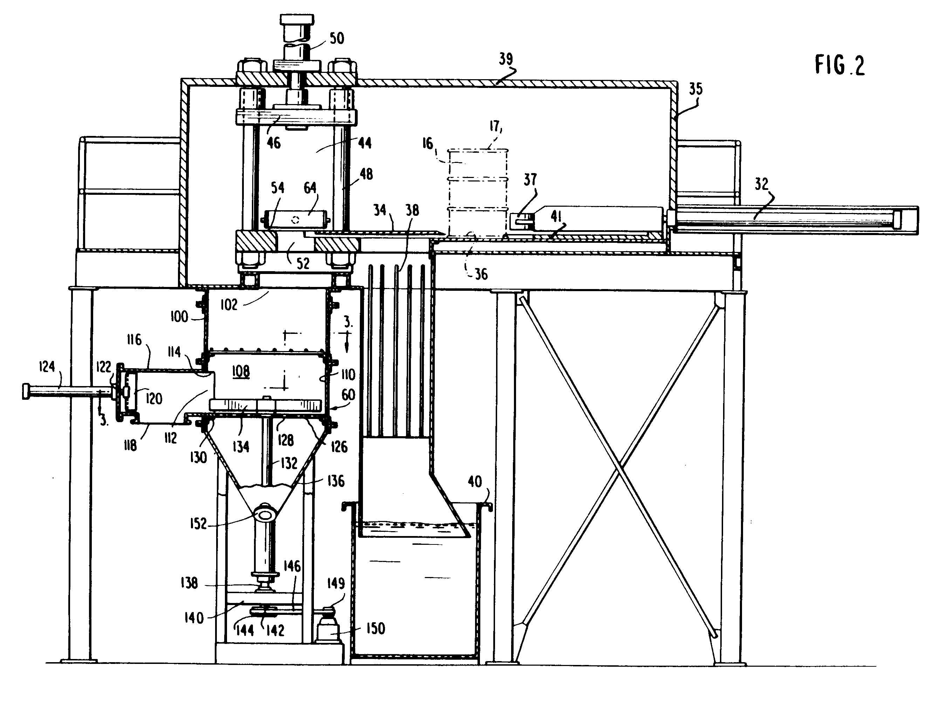

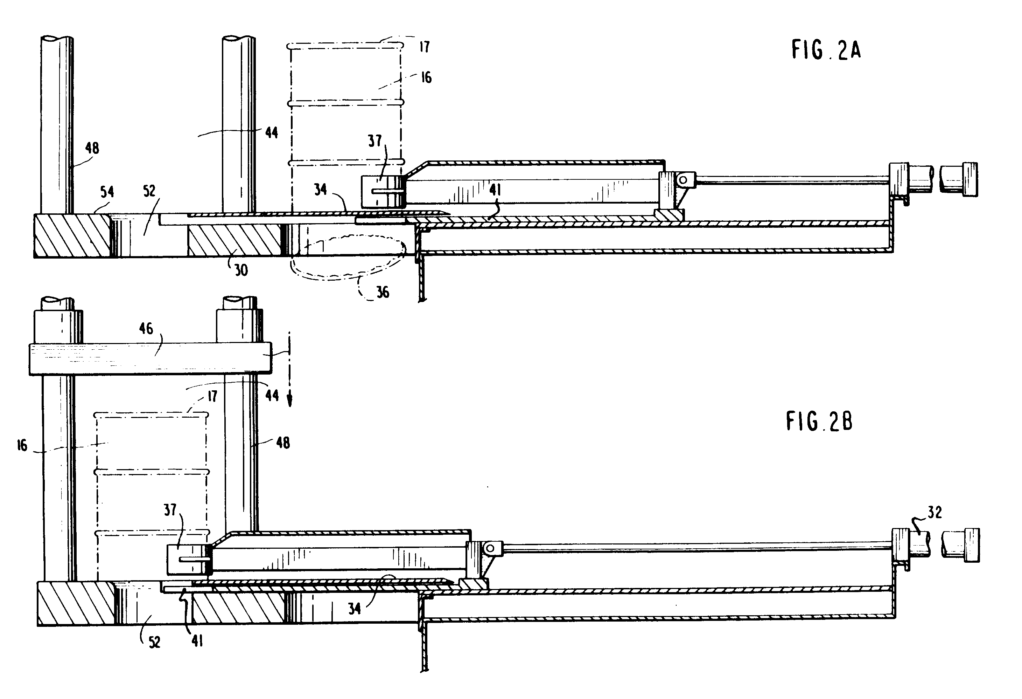

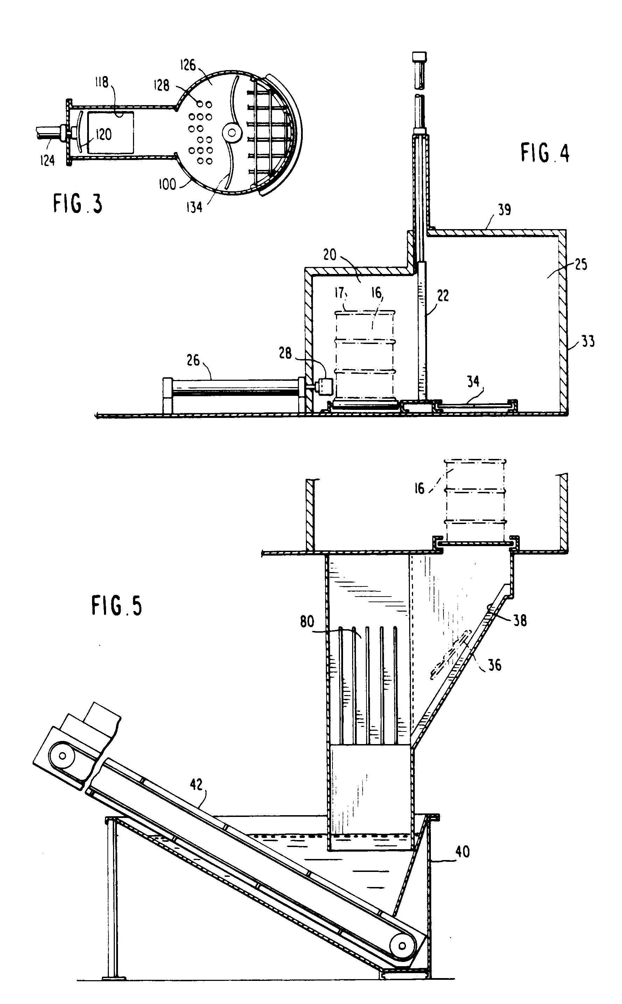

The conveyor, for moving the drum 16 from the purge compartment 20, includes a cylinder 26 from which extends a piston whose exposed end has a generally semicircular drum engaging pusher 28 for partially encircling the outside of the drum 16. The drum is moved onto a platform 30 in a housing 25 which is enclosed by side wall 33, end wall 35 and roof 39 (Figure 2). The wall 35 has means to permit passage of a piston extendible from a cylinder 32, the exposed end of the piston within the housing 25 having a drum engaging pusher 37 contoured partially to encircle the drum 16. Forward of the drum 16 and positioned above the platform 30 is a fixed shear blade 34 which the drum 16 passes upon forward movement of the pusher 37 which is programmed to perform this function at predetermined sequence intervals. A drum bottom engaging plate 41 moves with the pusher 37 and passes beneath the shear blade 34 as the drum 16 is advanced through the shear blade 34. The plate 41 prevents the drum from tilting. As the drum passes completely through the shear blade 34, Figures 2A and 2B, the sheared bottom lid 36 is completely removed and falls by gravity into a chute 38, Figure 5, which carries the severed lid into a water receiving tank 40, potentially sealed, having a conveyor 42 therein. It will be appreciated that the shear blade 34 may be hydraulically operated to be movable to shear the drum lids.

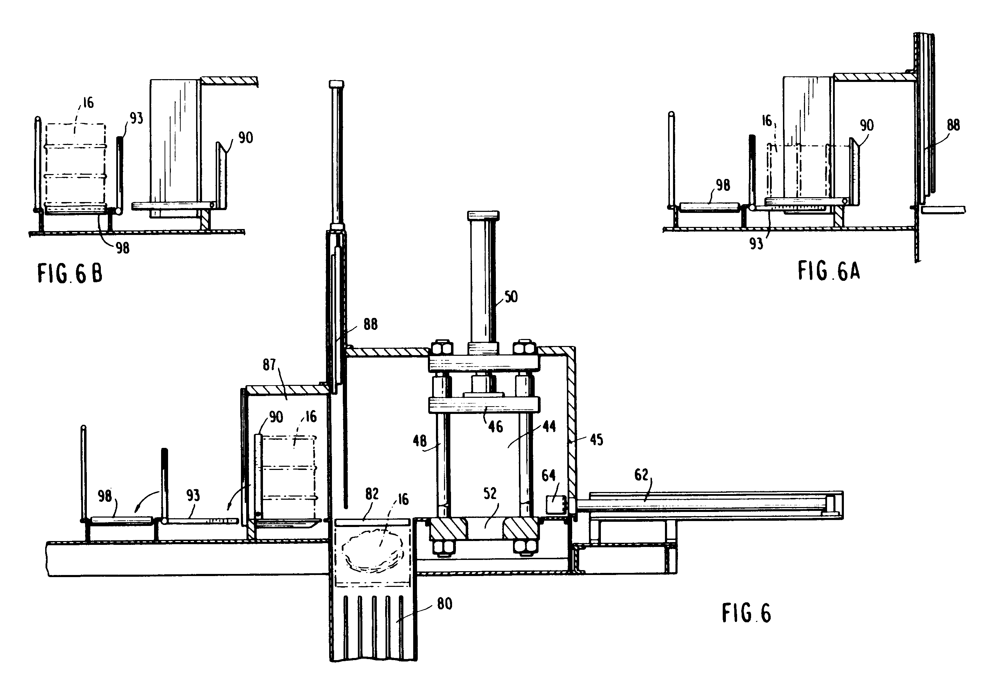

The sheared drums are removed sequentially into a compacting chamber 44 having a compactor 46 movable on supports 48 at the end of a piston extending from a cylinder 50, Figures 2 and 6. The chamber 44 has an opening 52 in the floor 54 which permits passage of the waste materials. The compactor 46 is operated whereby it moves downwardly and engages the top 17 of the drum 16. As the compactor continues downwardly, the drum 16 is compressed whereby the contents thereof are extruded and pass through the opening 52 and into a sorter 60 directly therebelow, Figure 2.

The wall 45 of chamber 44 has means to permit passage of a piston extending from a cylinder 62 and having a drum engaging pusher 64 which is formed partially to encircle the drum 16, Figure 6. After the drum 16 has been compacted and the contents extruded, the piston is operated whereby the drum engaging pusher 64 engages the compressed drum and moves it to a chute 80. The chute 80 may be closed by a plate 82 which is operated by a raising and lowering mechanism 84 having a plate engaging arm 86, Figure 1. The chute 80 is normally open to receive the compressed drum carcase which falls into the tank or conveyor seal 40.

In the event of a problem in compacting a drum, the downward action of the compactor 46 is stopped and returned to its uppermost position. At the same time, the plate 82 is moved by the mechanism 84 to close the chute 80. The pusher 64 is operated to push the partially compacted drum 16 onto the plate 82 which is adjacent a compartment 87 having an air-lock door 88 which is automatically opened upon onset of an emergency, e.g. failure of the compactor completely to compress a drum. The partially compacted drum is then moved into the chamber 87 and onto a pivotable drum engaging support 90. The door 88 is closed, and the system re-set to continue operation without excessive downtime. The operator then attends to removal of the partially compacted drum by a 180° turnover mechanism which functions in two stages, a first means 91 functioning to pivot the support 90 through 90° to the position shown in Figure 6A, and second means 93 then turning the drum upright until it rests on a conveyor 98 as shown in Figure 6B. Thereafter, the partially compacted drums are transported off the system.

The sorter 60 comprises an upper section 100 having an open end 102 to receive the contents issuing through the opening 52, Figure 2. A sorting chamber 108 has a continuous wall 110, broken at 112 to form an opening in which there is received the open end 114 of a valve housing 116. The valve housing 116 has an outlet port 118 which is closed by moving a valve gate 120 into the open end 112. The valve gate 120 is attached to a piston 122 which moves in cylinder 124. The operation may be manual or automatic.

The floor 126 of the sorting chamber 108 has a series of perforations 128 and rests on a continuous flange 130. A larger perforation in the centre of the floor permits passage of a rotatable shaft 132 having a blade 134 on the upper end thereof. The blade 134 is just slightly above the floor 126 and is smaller than the diameter of the chamber 108. The shaft 132 extends downwardly through a frusto-conical lower housing 136 having an opening at the bottom end thereof for passage of the end 138 of the shaft 132 which is journalled in a support member 140. The outer extremity 142 of the shaft 132 has a pulley 144 co-operating with a pulley belt 146 which is attached to the pulley wheel 149 of a motor 150. The frusto-conical housing 136 has an exit port 152 which may or may not be opened and closed by a valve gate.

Liquid and sludge materials from the compacted drums are urged through the perforations in the floor 126 by the slowly clockwise moving blade 134 and then through the port 152 for transportation to storage tanks. Solid objects such as metal and debris from the compacted drums collect on the perforated floor 126. When a sufficient quantity of solid objects have collected on the floor 126, the port 118 is opened by moving the gate valve 120 to the position shown in Figure 2, and the motor 150 is reversed whereby the blade 134 turns counter-clockwise thus ejecting the solid objects out through the opening 112 of the sorting chamber 108. The solid objects thus ejected fall through the port opening 118 and into a dumpster or other receiver positioned therebelow.

## Claims

1. Waste handling apparatus, comprising can opening and emptying means of the kind including conveyor means (14,26,28,32,37) for conveying closed cans sequentially to a shear station (34) for shearing through said cans to form sheared lids (36) and to a compactor station (44) for compacting said sheared cans to extrude the contents of said cans, is characterised by further comprising:

a purging chamber (20,25,44), for receiving cans in the form of industrial drums (16) containing waste having both solid and liquid/sludge components, said purging chamber (20) having an inlet for inert gas to give a substantially air-free environment; and

a sorting means (60), for receiving the waste extruded from said compacted drums (16), said sorting means (60) having a separator (126) for separating the waste into solid components and liquid/sludge components.

2. Waste handling apparatus according to claim 1, characterised in that said shear station (34) and said compactor station (44) are operable upon said drums (16) with said drums in their upright positions and with the compaction of said drums being in their axial directions.

3. Waste handling apparatus according to claim 1 or claim 2, characterised in that said shear station comprises a fixed blade (34) and said drums are moved thereagainst by a conveyor (32,37) whereby said sheared lid (36) of each of said drums is removed.

4. Waste handling apparatus according to claim 1 or claim 2, characterised in that said shear station comprises a movable blade to remove said sheared lids of said drums.

5. Waste handling apparatus according to any preceding claim, characterised in that said shear station (34) has a chute (38) for directing said sheared lids (36) into a water-containing tank (40).

6. Waste handling apparatus according to any preceding claim, characterised in that said compactor station (44) has a conveyor (62,64) for moving said compacted drums there from and a chute (80) for directing said compacted drums into a water-containing tank (40).

7. Waste handling apparatus according to any preceding claim, characterised in that there is a drum receiving chamber (87) for receiving partially compacted drums ejected from said compactor station (44) and a conveyor (98) for moving said partially compacted drums away from said drum receiving chamber (87).

8. Waste handling apparatus according to claim 7, characterised in that said partially compacted drums are transferred from said drum receiving chamber (87) to said conveyor (98) by a turnover mechanism (91,93).

9. Waste handling apparatus according to any preceding claim, characterised in that said sorting means (60) comprises a housing (108) located beneath said compactor station (44) and having said separator (126) therein and separate discharges (118,152) for the solid components and the liquid/sludge components of the waste.

10. Waste handling apparatus according to claim 9, characterised in that said separator comprises a perforated floor (126) which permits passage of liquids and sludge and blocks passage of solids.

11. Waste handling apparatus according to claim 10, characterised in that said discharge for the solid components of the waste includes a valve (120) and a normally closed discharge port (118), a valve-controller for opening said discharge port when a predetermined amount of the solid components of the waste has collected on said perforated floor (126), and means (134) for removing said collected solid components from said perforated floor (126) to said discharge port (118).

12. Waste handling method, comprising the use of can opening and emptying means of the kind including conveyor means (14,26,28,32,37) for conveying closed cans sequentially to a shear station (34) for shearing through said cans to form sheared lids (36) and to a compactor station (44) for compacting said sheared cans to extrude the contents of said cans, is characterised by the further steps of: delivering cans, in the form of industrial drums (16) containing waste having both solid and liquid/sludge components, to a purging chamber (20,25,44) from which substantially all of the air is purged by use of an inert gas introduced thereto; and sorting the waste extruded from the compacted drums (16) at a separator (126) which separates the waste into solid components and liquid/sludge components.

**Revendications**

1. Dispositif pour le traitement des déchets, comportant des moyens d'ouvrir et de vider un bidon du type comprenant des moyens formant transporteur (14,26,28,32,37) pour transporter successivement des bidons clos et à une station de cisaillage 34) pour cisailler de part en part lesdits bidons pour donner des couvercles cisaillés (36) à une station de compactage (44) pour compacter lesdits bidons cisaillés pour extraire les contenus desdits bidons, dispositif caractérisé par ce qu'il comporte en outre:

une chambre de purge (20,25,44) pour recevoir des bidons ayant la forme de fûts industriels (16) et contenant des déchets comprenant à la fois des composants solides et des composants liquides/boueux, ladite chambre de purge (20) comportant une entrée pour un agz inerte pour donner un environnement substantiellement exempt d'air; et

des moyens de tri (60) pour recevoir les déchets extrudés hors desdits fûts compactés (16), lesdits moyens de tri comprenant un séparateur (126) pour séparer les déchets en composants solides et en composants liquides/boueux.

2. Dispositif pour le traitement de déchets conformément à la revendication 1, caractérisé par le fait que l'on peut faire fonctionner ladite station de cisaillage (34) et ladite station de compactage (44) sur lesdits fûts (16) lesdits fûts étant dans la position verticale, et le compactage desdits fûts se faisant selon la direction axiale.

3. Dispositif pour le traitement de déchets conformément à la revendication 1, ou à la revendication 2, caractérisé par le fait que ladite station de cisaillage comporte une lame fixe (34) et que lesdits fûts se déplacent pour venir contre elle au moyen d'un transporteur (32,37), ce par quoi on détache ledit couvercle cisaillé (36) de chacun desdits fûts.

4. Dispositif de traitement des déchets conformément à la revendication 1 ou à la revendication 2, caractérisé par le fait que ladite station de cisaillage comporte une lame mobile pour enlever lesdits couvercles cisaillés desdits fûts.

5. Dispositif de traitement de déchets conformément à l'une quelconque des revendications précédentes, caractérisé par le fait que ladite station de cisaillage (34) comporte une goulotte (38) pour envoyer lesdits couvercles cisaillés (36) dans un réservoir (40) contenant de l'eau.

6. Dispositif de traitement de déchets conformément à l'une quelconque des revendications précédentes, caractérisé par le fait que ladite station de compactage (40) comporte un transporteur (62,64) pour en évacuer lesdits fûts compactés et une goulotte (80) pour envoyer lesdits fûts compactés dans un réservoir (40 contenant de l'eau.

7. Dispositif de traitement de déchets conformément à l'une quelconque des revendications précédentes, caractérisé par le fait qu'il existe une chambre (87) de réception des fûts pour recevoir des fûts, partiellement compactés, éjectés hors de ladite station de compactage (44), ainsi qu'un transporteur (98) pour écarter lesdits fûts, partiellement compactés, de ladite chambre (87) de réception des fûts.

8. Dispositif de traitement de déchets conformément à la revendication 7, caractérisé par le fait que lesdits fûts partiellement compactés sont transférés, depuis ladite chambre (87) de réception des fûts, sur ledit transporteur (98) par un mécanisme de retournement (91,93).

9. Dispositif de traitement de déchets conformément à l'une quelconque des revendications précédentes, caractérisé par le fait que lesdits moyens de tri (60) comportent un carter (108) situé sous ladite station de compactage (44) et contenant ledit séparateur (126), ainsi que des évacuations distinctes (118,152) pour les composants solides et pour les composants liquides/boueux des déchets.

10. Dispositif de traitement de déchets conformément à la revendication 9, caractérisé par le fait que ledit séparateur comporte un plancher perforé (126) qui permet le passage des liquides et de la boue et interdit le passage des solides.

11. Dispositif de traitement de déchets conformément à la revendication 10, caractérisé par le fait que ladite évacuation pour les composants solides des déchets comporte une vanne (120) et un orifice d'évacuation (118) normalement obturé, un dispositif de commande de la vanne pour ouvrir ledit orifice d'évacuation lorsqu'une quantité prédéterminée de composants solides des déchets s'est rassemblée sur ledit plancher perforé (26), et des moyens (134) pour faire passer lesdits composants solides rassemblés, depuis ledit plancher perforé (126), vers ledit orifice d'évacuation (118).

12. Procédé de traitement de déchets, comportant l'emploi de moyens d'ouverture et de vidage de bidons, du type comportant des moyens formant transporteur (14,26,28,32,37) pour transporter successivement des bidons clos à une station de cisaillage pour cisailler de part en part lesdits bidons pour donner des couvercles cisaillés (36) et à une station de compactage pour compacter lesdits bidons cisaillés pour extraire les contenus desdits bidons caractérisé par les autres étapes consistant à amener des bidons, sous forme de fûts industriels (16) contenant des déchets comprenant à la fois des composants solides et des composants liquides/boueux, à une chambre de purge (20,25,44) dont substantiellement tout l'air est purgé au moyen d'un gaz inerte que l'on introduit, et trier les déchets extrudés hors des fûts compactés (16) sur un séparateur (36) qui sépare les déchets en composants solides et en composants liquides/boueux.

## Patentansprüche

1. Abfallbehandlungsvorrichtung, die Mittel zum Behälteröffnen und -entleeren, die Fördermittel (14,26,28,32,37) aufweisen, umfaßt, um geschlossene Behälter nacheinander zu einer Scherstation (34) zum Durchschneiden der Behälter unter Bildung abgeschnittener Deckel (36) und zu einer Verdichterstation (44) zu befördern, um die durchschnittenen Behälter zum Herauspressen des Behälterinhaltes zusammenzudrücken, dadurch gekennzeichnet, daß sie ferner umfaßt:

   eine Kammer (20,25,44) zur Aufnahme der Behälter in Form industrieller Fässer (16), die Abfall sowohl mit festen Komponenten als auch mit Flüssigkeits/Schlamm-Komponenten enthalten, wobei die Kammer (20) einen Einlaß für inertes Gas zur Schaffung einer im wesentlichen luftfreien Umgebung aufweist, und

   ein Sortiergerät (60) zur Aufnahme des aus den zusammengedrückten Fässern (16) herausgepreßten Abfalls, wobei das Sortiergerät (60) einen Separator (126) zum Trennen des Abfalls in feste Komponenten und Flüssigkeits/Schlamm-Komponenten aufweist.

2. Abfallbehandlungsvorrichtung gemäß Anspruch 1, dadurch gekennzeichnet, daß die Scherstation (34) und die Verdichterstation (44) mit den Fässern (16) betreibbar sind, wobei sich die Fässer in aufrechter Stellung befinden und das Zusammendrücken der Fässer in ihren Axialrichtungen erfolgt.

3. Abfallbehandlungsvorrichtung gemäß Anspruch 1 oder 2, dadurch gekennzeichnet, daß die Scherstation eine fixierte Klinge (34) umfaßt, gegen die die Fässer durch ein Fördergerät (32,37) bewegt werden, wodurch der abgeschnittene Deckel (36) jedes Fasses entfernt wird.

4. Abfallbehandlungsvorrichtung gemäß Anspruch 1 oder 2, dadurch gekennzeichnet, daß die Scherstation eine bewegliche Klinge zur Entfernung der abgeschnittenen Deckel der Fässer umfaßt.

5. Abfallbehandlungsvorrichtung gemäß irgendeinem vorhergehenden Anspruch, dadurch gekennzeichnet, daß die Scherstation (34) einen Schacht (38) aufweist, um die abgeschnittenen Dekkel (36) in einen Wasser enthaltenden Tank (40) zu führen.

6. Abfallbehandlungsvorrichtung gemäß irgendeinem vorhergehenden Anspruch, dadurch gekennzeichnet, daß die Verdichterstation (44) ein Fördergerät (62,64) zum Wegführen der zusammengedrückten Fässer und einen Schacht (80) aufweist, um die zusammengedrückten Fässer in einen Wasser enthaltenden Tank (40) zu führen.

7. Abfallbehandlungsvorrichtung gemäß irgendeinem vorhergehenden Anspruch, dadurch gekennzeichnet, daß sie eine Fässeraufnahmekammer (87) zur Aufnahme von aus der Verdichterstation (44) ausgestoßenen, teilweise zusammengedrückten Fässern und ein Fördergerät (98) aufweist, um die teilweise zusammengedrückten Fässer von der Fässeraufnahmekammer (87) wegzuführen.

8. Abfallbehandlungsvorrichtung gemäß Anspruch 7, dadurch gekennzeichnet, daß die teilweise zusammengedrückten Fässer von der Fässeraufnahmekammer (87) durch einen Wendemechanismus (91,93) zum Fördergerät (98) überführt werden.

9. Abfallbehandlungsvorrichtung gemäß irgendeinem vorhergehenden Anspruch, dadurch gekennzeichnet, daß das Sortiergerät (60) ein unterhalb der Verdichterstation (44) angebrachtes Gehäuse (108) mit dem darin befindlichen Separator (126) und separate Austrittsöffnungen (118,152) für die festen Komponenten und die Flüssigkeits/Schlamm-Komponenten des Abfalls umfaßt.

10. Abfallbehandlungsvorrichtung gemäß Anspruch 9, dadurch gekennzeichnet, daß der Separator einen perforierten Boden (126) aufweist, der den Durchgang von Flüssigkeiten und Schlamm erlaubt und den Durchgang von Feststoffen verhindert.

11. Abfallbehandlungsvorrichtung gemäß Anspruch 10, dadurch gekennzeichnet, daß die Austrittsöffnung für die festen Komponenten des Abfalls ein Ventil (120) und eine normalerweise geschlossene Austrittsöffnung (118), einen Ventilregler zum Öffnen der Austrittsöffnung, wenn sich eine vorherbestimmte Menge fester Komponenten des Abfalls auf dem perforierten Boden (126) angesammelt hat, und Mittel (134) zum Entfernen der angesammelten festen Komponenten vom perforierten Boden (126) zur Austrittsöffnung (118) umfaßt.

12. Abfallbehandlungsmethode, die die Verwendung von Behälteröffnungs- und -entleerungsmitteln, die Fördermittel (14,26,28, 32,37) aufweisen, umfaßt, um geschlossene Behälter nacheinander zu einer Scherstation (34) zum Durchschneiden der Behälter unter Bildung abgeschnittener Deckel (36) und zu einer Verdichterstation (44) zu befördern, um die durchgeschnittenen Behälter zum Heraus-pressen des Behälterinhaltes zusammenzu-drücken, gekennzeichnet durch die weiteren Schritte:

Befördern der Behälter in Form industrieller Fässer (16), die Abfall sowohl mit festen Komponenten als auch mit Flüssigkeits/Schlamm-Komponenten enthalten, zu einer Kammer (20,25, 44), aus der im wesentlichen die gesamte Luft durch Verwendung eines dorthin eingeführten inerten Gases entfernt worden ist, und

Sortieren des aus den zusammengedrückten Fässern (16) herausgepreßten Abfalls in einem Separator (126), der den Abfall in feste Komponenten und Flüssigkeits/Schlamm-Komponenten trennt.

FIG.1

FIG.2

9

FIG.2A

FIG.2B

EP 0 270 200 B1

FIG.3

FIG.4

FIG.5

FIG. 6 B

FIG. 6A

FIG. 6

EP 0 270 200 B1